# EUROPÄISCHE PATENTSCHRIFT

(11) **EP 0 418 602 B1**
(45) Veröffentlichungstag und Bekanntmachung des Hinweises auf die Patenterteilung: **04.08.1993**
(21) Anmeldenummer: 90116432.7
(22) Anmeldetag: 28.08.1990
(51) Int. Cl.: B60T 8/42, B60T 8/40

(54) **Blockierschutzvorrichtung**
Anti-lock device
Dispositif d'antiblocage

(30) Priorität: 20.09.1989 DE 3931307
(43) Veröffentlichungstag der Anmeldung: 27.03.1991
(73) Patentinhaber: ROBERT BOSCH GMBH, 70442 Stuttgart (DE)
(72) Erfinder: Willmann, Karl-Heinz, Dipl.-Ing., D-7149 Freiberg/N (DE)

(56) Entgegenhaltungen:
- EP-A- 0 171 901
- EP-A- 0 202 845
- DE-A- 3 737 726
- DE-B- 1 655 383
- GB-A- 2 194 010
- US-A- 4 703 979

## Beschreibung

Die Erfindung geht aus von einer Blockierschutzvorrichtung nach der Gattung des Hauptanspruchs. Es ist schon eine solche Blockierschutzvorrichtung aus der DE-PS 1 655 383 (Figur 5) bekannt, bei welcher der Druckmittelspeicher als Zylinder mit federbelastetem Kolben ausgebildet ist und ein Druckschalter zum Ein- und Ausschalten der Rückförderpumpe an die Rückförderleitung in Förderrichtung nach der Drossel angeschlossen ist. Die Rückförderpumpe wird bei Erreichen eines Druckes, der aufgrund der Charakteristik der im Druckmittelspeicher angeordneten Feder einem vorgegebenen Druckmittelvolumen im Druckmittelspeicher entspricht, eingeschaltet. Die ein konstantes Fördervolumen aufweisende Rückförderpumpe fördert das Druckmittel aus dem Druckmittelspeicher in den Hauptbremszylinder. Dessen Pedal wird hierdurch zurückgestoßen. Zu große und zu heftige Pedalbewegungen werden jedoch vom Fahrer des Fahrzeugs als unangenehm empfunden. Um diese Rückwirkung zu mindern, ist die Drossel in der Rückförderleitung vorgesehen, welche den Druckmittelförderstrom auf einen niedrigen Wert begrenzt. Bei besonders starkem Bremsdruckabbau in der Radbremse während eines Blockierschutz-Regelvorganges kann es jedoch aufgrund der Wirkung der Drossel zu einem Überschuß an Druckmittel im Druckmittelspeicher und zu einem Mangel im Hauptbremszylinder kommen. Dies ist aus Sicherheitsgründen unzulässig.

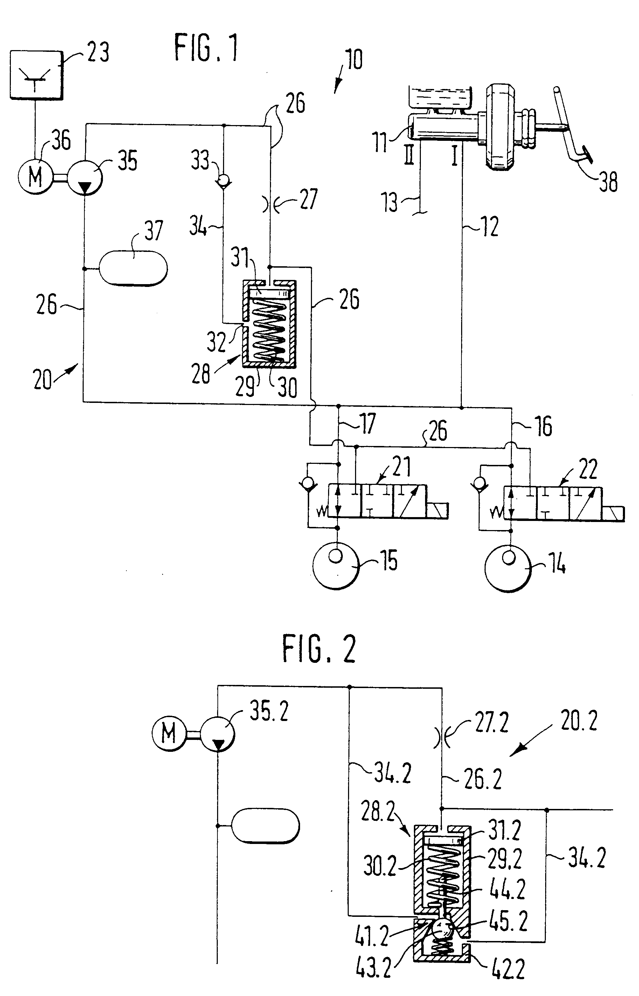

Eine bekannte Blockierschutzvorrichtung für eine Fahrzeug-Bremsanlage weist eine sich zwischen einem Hauptbremszylinder und einer Radbremse erstreckende Bremsleitung mit einer Blockierschutz-Ventilanordnung auf (EP-A-0 171 901, Figur 1). Radbremsseitig geht von der Bremsleitung eine Rückförderleitung aus, welche in einen Druckmittelspeicher mit einem federbelasteten Speicherkolben mündet. Mit dem Speicherkolben ist ein Pumpenkolben einer Rückförderpumpe gekoppelt, die saugseitig über eine Drossel mit dem Speicher und druckseitig mit der Bremsleitung zwischen dem Hauptbremszylinder und der Blockierschutzventilanordnung in Verbindung steht. Der Speicherkolben hat den Zweck, zum einen das Aufnahmevolumen des Druckmittelspeichers veränderlich zu gestalten, zum anderen aber den Pumpenkolben in Wirkverbindung mit einem ständig angetriebenen Exzenter zu bringen, um die Rückförderpumpe in Betrieb zu setzen.

### Vorteile der Erfindung

Die erfindungsgemäße Blockierschutzvorrichtung mit den kennzeichnenden Merkmalen des Hauptanspruchs hat demgegenüber den Vorteil, daß der Hauptbremszylinder bei Blockierschutz-Regelvorgängen sowohl mit geringem als auch mit großem Bremsdruckabbau stets in ausreichendem Maß mit Druckmittel versorgt wird. Dannoch bleibt aber bei der überwiegenden Zahl von Blockierschutz-Regelvorgängen mit geringem Bremsdruckabbau die Pedalrückwirkung gering, weil dann der Druckmittelspeicher nur zu einem geringen Teil gefüllt ist und die Rückförderpumpe auch nur einen niedrigen Förderstrom liefern muß.

Durch die in den Unteransprüchen aufgeführten Maßnahmen sind vorteilhafte Weiterbildungen und Verbesserungen der im Hauptanspruch angegebenen Blockierschutzvorrichtung möglich.

### Zeichnung

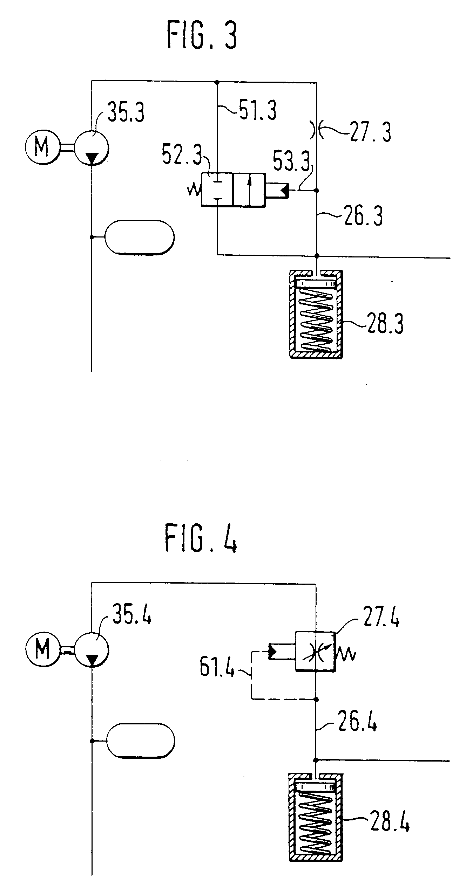

Ausführungsbeispiele der Erfindung sind in der Zeichnung vereinfacht dargestellt und in der nachfolgenden Beschreibung näher erläutert. Es zeigen Figur 1 ein Schema einer teilweise dargestellten Fahrzeug-Bremsanlage mit einer Blockierschutzvorrichtung, welche einen an eine Rückförderleitung mit einer Drossel angeschlossenen Druckmittelspeicher hat, von dem als erstes Ausführungsbeispiel eine Umgehungsleitung für die Drossel mit einem Rückschlagventil ausgeht, Figur 2 einen Ausschnitt des Schemas nach Figur 1 mit einer als zweites Ausführungsbeispiel den Druckmittelspeicher und die Drossel umgehenden Leitung, in der ein von der beweglichen Trennwand des Druckmittelspeichers betätigbares Absperrventil angeordnet ist, Figur 3 einen Ausschnitt des Schemas nach Figur 1 mit einer ein druckgesteuertes Wegeventil aufweisenden Bypass-Leitung für die Drossel als drittes Ausführungsbeispiel und Figur 4 einen Ausschnitt des Schemas nach Figur 1 mit einer druckeinstellbaren Drossel als viertes Ausführungsbeispiel.

### Beschreibung der Ausführungsbeispiele

Die in Figur 1 dargestellte Fahrzeug-Bremsanlage 10 hat einen pedalbetätigbaren Hauptbremszylinder 11, an den eine Hauptbremsleitung 12 eines Bremskreises I und eine Hauptbremsleitung 13 eines Bremskreises II angeschlossen sind. Die Hauptbremsleitung 12 ist in zur Radbremse 14 und 15 des Bremskreises I führenden Bremsleitungen 16 und 17 verzweigt. In entsprechender Weise ist der Bremskreis II ausgestattet, so daß auf dessen Beschreibung verzichtet werden kann.

Der Bremskreis I der Fahrzeug-Bremsanlage 10 ist (ebenso wie der Bremskreis II) mit einer Blockierschutzvorrichtung 20 versehen. Dieser weist je eine in den Bremsleitungen 16 und 17 angeordnete Blockierschutzventilanordnung 21 und 22 auf. Die als 3/3-Wegeventile ausgebildeten Blockierschutzventilanordnungen 21 und 22 sind mittels einer elektronischen Blockierschutzsteuereinrichtung 23 elektrisch schaltbar. Die Blockierschutzventilanordnungen 21 und 22 erlauben je nach Schaltstellung den Aufbau von im Hauptbremszylinder 11 erzeugten Bremsdruck in den Radbremsen 14 und 15 (wie gezeichnet) oder im Falle eines Blockierschutz-Regelvorganges den Druckabbau und das Halten des Bremsdrucks.

Für das Ableiten des Druckmittels aus den Radbremsen 14 und/oder 15 ist an die Blockierschutzventilanordnungen 21 und 22 eine gemeinsame Rückförderleitung 26 angeschlossen. In der Rückförderleitung 26 ist eine Drossel 27 angeordnet. An die Rückförderleitung 26 ist außerdem in Förderrichtung des Druckmittels gesehen vor der Drossel 27 ein Druckmittelspeicher 28 angeschlossen. Dieser ist als Zylinder 29 mit einem von einer Druckfeder 30 belasteten Kolben 31 ausgebildet. Beim ersten Ausführungsbeispiel der Erfindung hat der Druckmittelspeicher 28 an seinem Umfang an einer Stelle, welche vom Kolben 31 bei etwa halber Speicherfüllung mit Druckmittel überfahren wird, eine Anschlußöffnung 32. Von dieser führt eine die Drossel 27 umgehende, ein Rückschlagventil 33 aufweisende Umgehungsleitung 34 zur Rückförderleitung 26. In Förderrichtung des Druckmittels gesehen folgt danach eine in der Rückförderleitung 26 liegende Rückförderpumpe 35 mit einem elektrischen Antriebsmotor 36, welcher durch die Blockierschutzsteuereinrichtung 23 gesteuert wird. Die Rückförderpumpe 35 ist als Freikolbenpumpe ausgebildet; sie kann aber auch eine Konstantpumpe oder eine Verstellpumpe sein. Nach der Rückförderpumpe 35 ist ein Dämpfer 37 für Druckschwingungen im Druckmittel an die Rückförderleitung 26 angeschlossen.

Beim Abbau von Bremsdruck während eines Blockierschutz-Regelvorganges fließt, wie erwähnt, Druckmittel aus der Radbremse 14 und/oder der Radbremse 15 durch die Rückförderleitung 26 zum Druckmittelspeicher 28 und füllt diesen mit einem bestimmten Druck auf, der durch einen von der Gegenkraft der Druckfeder 30 erzeugten Gegendruck bestimmt ist. Gleichzeitig mit dem Druckabbauvorgang schaltet die Blockierschutzsteuereinrichtung 23 den elektrischen Antriebsmotor 36 der Rückförderpumpe 35 ein. Wenn der Druckmittelspeicher 28 nur zu einem geringen Teil, z. B. mit weniger als der Hälfte seines maximalen Aufnahmevolumens, mit Druckmittel gefüllt ist, fördert die Rückförderpumpe 35 das Druckmittel mit geringem Förderstrom aus dem Druckmittelspeicher 28 durch die Rückförderleitung 26 in die Hauptbremsleitung 12 zurück in den Hauptbremszylinder 11. Der kleine Förderstrom übt nur eine geringe Rückwirkung am Bremspedal 38 des Hauptbremszylinders 11 aus. Der niedrige Förderstrom wird beim Ausführungsbeispiel nach Figur 1 dadurch erzielt, daß die Drossel 27 das Druckmittel aus dem Druckmittelspeicher 28 verzögert an die als Freikolbenpumpe ausgebildete Rückförderpumpe 35 abgibt. Der geringe Förderstrom kann auch mit einer Verstellpumpe oder einer mit verringerter Drehzahl betriebenen Konstantpumpe bei Wegfall der Drossel 27 erzielt werden.

Bei einem starken Abbau von Bremsdruck in der Radbremse 14 und/oder der Radbremse 15 kann es zu einer Füllung des Druckmittelspeichers 28 mit Druckmittel in einem Maß kommen, daß bei einer unmittelbar auf den Blockierschutz-Regelvorgang folgenden Vollbremsung im Hauptbremszylinder 11 Druckmittel in unzureichender Menge vorhanden ist. Dieser Mangel wird dadurch verhindert, daß beim Ausführungsbeispiel nach Figur 1 der Kolben 31 im Druckmittelspeicher 28 bis über die Anschlußöffnung 32 hinaus gegen die Kraft der Druckfeder 30 zurückgedrängt wird: Das Druckmittel kann nun durch die freigegebene Anschlußöffnung 32 aus dem Druckmittelspeicher 28 entweichen und ungedrosselt durch die Umgehungsleitung 34 und das Rückschlagventil 33 in die Rückförderleitung 26 zur Rückförderpumpe 35 fließen. Die als Freikolbenpumpe ausgebildete Rückförderpumpe 35 fördert das Druckmittel mit vergrößertem Volumenstrom zurück in den Hauptbremszylinder 12. Die dabei am Bremspedal 38 verstärkt auftretende Rückwirkung der Druckmitteleinspeisung in den Hauptbremszylinder 11 hält so lange an, bis der Kolben 31 bei sich verringernder Druckmittelfüllung im Druckmittelspeicher 28 über die Anschlußöffnung 32 bewegt wird und den Strömungsweg über die Umgehungsleitung 34 sperrt.

Das für die Größe des Förderstromes maßgebende Ausmaß der Füllung des Druckmittelspeichers 28 kann auch dadurch ermittelt werden, daß dem Druckmittelspeicher 28 Sensoren zugeordnet sind, welche die Stellung des Kolbens 31 erfassen. Diese Sensoren können vom Kolben 31 betätigte Schalter sein. In Abhängigkeit von deren Signal kann die Blockierschutzsteuereinrichtung 23 bei hohem Füllungsgrad des Druckmittelspeichers 28 den elektrischen Antriebsmotor 36 einer als Konstantpumpe ausgebildeten Rückförderpumpe 35 mit erhöhter Drehzahl betreiben oder bei einer Verstellpumpe deren Fördervolumen verändern. Auch kann zur Pumpensteuerung eine Messung des im Druckmittelspeicher 28 herrschenden Druckes herangezogen werden, weil aufgrund der Kennlinie der Druckfeder 30 eine Zuordnung des Füllungsgrades des Druckmittelspeichers 28 zum Meßergebnis möglich ist.

Auch kann zur Bemessung des Förderstromes der Rückförderpumpe 35 die von der Blockierschutzsteuereinrichtung 23 gemessene Verzögerung des Fahrzeugs während eines Blockierschutz-Regelvorganges genutzt werden. Verringert sich nämlich die Fahrzeugverzögerung, weil an einem Rad Bremsschlupf auftritt, muß der Bremsdruck in der entsprechenden Radbremse abgesenkt werden. Bei einer starken Bremsdruckabsenkung fällt ein großes Druckmittelvolumen an, welches durch die Rückförderpumpe 35 mit vergrößertem Förderstrom zum Hauptbremszylinder 11 zurückgefördert werden muß.

Wie vorstehend ausgeführt, kann der Förderstrom der Rückförderpumpe 35 vergrößert werden mit zunehmendem Druck im Druckmittelspeicher 28 oder mit Erreichen einer vorbestimmten Füllung des Druckmittelspeichers oder mit zunehmendem Volumenstrom von aus der Radbremse 14 und/oder 15 zurückzuförderndem Druckmittel. Diese Kriterien können einzeln oder auch in Kombination Anwendung zur Steuerung des Förderstromes der Rückförderpumpe 35 Anwendung finden.

Beim Ausführungsbeispiel nach Figur 2 ist der Förderstrom der Rückförderpumpe 35.2 in Abhängigkeit von der Position des Kolbens 31.2 des Druckmittelspeichers 28.2 steuerbar. Die Blockierschutzvorrichtung 20.2 hat eine den Druckmittelspeicher 28.2 und die Drossel 27.2 in der Förderleitung 26.2 umgehende Leitung 34.2. In dieser Umgehungsleitung 34.2 liegt ein Absperrventil 41.2, welches im Gehäuse 42.2 des Druckmittelspeichers 28.2 angeordnet ist. Das Absperrventil 41.2 weist ein federbelastetes Schließglied 43.2 mit einem Stößel 44.2 auf, welcher in den Zylinder 29.2 des Druckmittelspeichers 28.2 ragt, und zwar in den Raum, welcher die am Kolben 31.2 angreifende Druckfeder 30.2 aufnimmt. Bei einer vorbestimmten Füllung des Druckmittelspeichers 28.2 mit Druckmittel greift der ausgelenkte Kolben 31.2 am Stößel 44.2 an und hebt das Schließglied 43.2 vom Ventilsitz 45.2 des Absperrventils 21.2 ab. Das Absperrventil 41.2 wird dadurch in seine Durchgangsstellung geschaltet, so daß weiterhin durch die Rückförderleitung 26.2 herangeführtes Druckmittel unter Umgehung der Drossel 27.2 zur Rückförderpumpe 35.2 fließt. Die als Freikolbenpumpe ausgebildete Rückförderpumpe 35.2 kann das Druckmittel mit vergrößertem Förderstrom zum Hauptbremszylinder 11 fördern. Sobald bei nachlassendem Zufluß von Druckmittel sich der Druckmittelspeicher 28.2 entleert und dabei das Absperrventil 41.2 schließt, kann die Rückförderpumpe 35.2 das nun durch die Drossel 27.2 zufließende Druckmittel mit verringertem Förderstrom fördern.

Bei diesem Ausführungsbeispiel wirkt der Kolben 31.2 als bewegliche Trennwand des Zylinders 29.2, welche den das Druckmittel aufnehmenden Zylinderraum vom die Druckfeder 30.2 enthaltenden Raum trennt. Anstelle des Kolbens 31.2 kann jedoch auch eine Membrane in den Zylinder eingesetzt sein zur Trennung beider Räume.

Beim Ausführungsbeispiel nach Figur 3 ist eine die Drossel 27.3 in der Förderleitung 26.3 umgehende Bypass-Leitung 51.3 mit einem 2/2-Wegeventil 52.3 vorgesehen. Das drucksteuerbare 2/2-Wegeventil 52.3 ist mit einer Steuerleitung 53.3 zwischen der Drossel 27.3 und dem Druckmittelspeicher 28.3 an die Förderleitung 26.3 angeschlossen. Das 2/2-Wegeventil nimmt ungesteuert eine Sperrstellung ein. Bei einem Druck in der Förderleitung 26.3, welcher wenigstens einer Halbfüllung des Druckmittelspeichers 28.3 entspricht, wird das 2/2-Wegeventil in seine Durchlaßstellung geschaltet. Beim Bremsdruckabbau dem Druckmittelspeicher 28.3 zufließendes Druckmittel wird jetzt ungedrosselt der Rückförderpumpe 35.3 zugeführt. Diese kann das Druckmittel mit vergrößertem Förderstrom zum Hauptbremszylinder 11 der Bremsanlage 10 fördern. Beim Absinken des Druckes in der Förderleitung 26.3 schaltet das 2/2-Wegeventil 52.3 in seine Sperrstellung, so daß das Druckmittel im Druckmittelspeicher 28.3 nun gedrosselt zur Rückförderpumpe 35.3 und von dort mit verringertem Förderstrom zum Hauptbremszylinder 11 fließt.

Das Ausführungsbeispiel nach Figur 4 ist mit einer druckeinstellbaren Drossel 27.4 in der Förderleitung 26.4 verwirklicht. Die Druckeinsteuerung in die Drossel 27.4 erfolgt durch eine Steuerleitung 61.4, welche an die Förderleitung 26.4 zwischen dem Druckmittelspeicher 28.4 und der Drossel angeschlossen ist. Die Einstellung der Drosselwirkung erfolgt daher in Abhängigkeit von im Druckmittelspeicher 28.4 herrschenden Druck. Diese Abhängigkeit besteht darin, daß mit zunehmendem Druck aufgrund sich erhöhender Füllung des Druckmittelspeichers 28.4 die Wirkung der Drossel 27.4 verringert wird. Bei niedrigem Druck und geringer Füllung des Druckmittelspeichers 28.4 kann daher die Rückförderpumpe 35.4 Druckmittel mit nur geringem Förderstrom ansaugen, bei großer Füllung des Druckmittelspeichers und demzufolge hohem Druck in der Förderleitung 26.4 wird aufgrund der abnehmenden Drosselwirkung der Drossel 27.4 der Förderstrom vergrößert. Mit abnehmendem Druck verstärkt sich wieder die Wirkung der Drossel 27.4.

## Patentansprüche

1. Blockierschutzvorrichtung (20) zwischen dem Hauptbremszylinder (11) und wenigstens einer Radbremse (14) eines Fahrzeugs, mit einer Blockierschutzventilanordnung (22) in einer vom Hauptbremszylinder zur Radbremse führenden Bremsleitung (16), mit einer Rückförderleitung (26) zum Fördern von Druckmittel aus der Radbremse zum Hauptbremszylinder, wobei in der Rückförderleitung in Förderrichtung aufeinanderfolgend nach einem Druckmittelspeicher (28) eine Drossel (27) und eine elektromotorisch angetriebene Rückförderpumpe (35) angeordnet sind, sowie mit Mitteln zum Steuern des Förderstromes der Rückförderpumpe, dadurch gekennzeichnet, daß der Förderstrom der Rückförderpumpe (35) vergrößerbar ist, wenn mindestens einer der folgenden Zustände auftritt: mit zunehmendem Druck im Druckmittelspeicher (28), mit Erreichen einer vorbestimmten Füllung des Druckmittelspeichers (28), mit zunehmendem Volumenstrom von aus der Radbremse (14) zurückzuförderndem Druckmittel.

2. Blockierschutzvorrichtung nach Anspruch 1, dadurch gekennzeichnet, daß die Drehzahl oder das Fördervolumen der Rückförderpumpe (35) veränderbar sind.

3. Blockierschutzvorrichtung nach Anspruch 1, mit einem Druckmittelspeicher (28) in Form eines Zylinders (29) mit einer beweglichen Trennwand (Kolben 31) dadurch gekennzeichnet, daß der Förderstrom der Rückförderpumpe (35) in Abhängigkeit von der Position der Trennwand (Kolben 31) steuerbar ist.

4. Blockierschutzvorrichtung nach Anspruch 1, mit einem Zylinder (29) mit einer beweglichen Trennwand (Kolben 31) als Druckmittelspeicher (28), dadurch gekennzeichnet, daß an den Zylinder (29) eine die Drossel (27) umgehende Leitung (34) mit einem Rückschlagventil (33) angeschlossen ist, welche von der Trennwand (Kolben 31) bei wenigstens annähernd halbgefülltem Zylinder (29) freigebbar ist.

5. Blockierschutzvorrichtung nach Anspruch 1, mit einem eine bewegliche Trennwand (Kolben 31.2) aufweisenden Druckmittelspeicher (28.2), dadurch gekennzeichnet, daß in einer den Druckmittelspeicher (28.2) und die Drossel (27.2) umgehenden Leitung (34.2) ein Absperrventil (41.2) vorgesehen ist, welches durch die Trennwand (Kolben 31.2) bei wenigstens annähernd halbgefülltem Druckmittelspeicher (28.2) in seine Durchgangsstellung schaltbar ist.

6. Blockierschutzvorrichtung nach Anspruch 1, dadurch gekennzeichnet, daß eine Bypass-Leitung (51.3) für die Drossel (27.3) mit einem 2/2-Wegeventil (52.3) versehen ist, welches bei einem vorgegebenen Druck im Druckmittelspeicher (28.3) die Bypass-Leitung freigibt.

7. Blockierschutzvorrichtung nach Anspruch 1, dadurch gekennzeichnet, daß die Drossel (27.4) in Abhängigkeit vom Druck im Druckmittelspeicher (28.4) druckeinstellbar ist.

## Claims

1. Wheel-lock protection appliance (20) between the main brake cylinder (11) and at least one wheel brake (14) of a vehicle, having a wheel-lock protection valve arrangement (22) in a brake conduit (16) leading from the main brake cylinder to the wheel brake, having a return conduit (26) for delivering pressure medium from the wheel brake to the main brake cylinder, a pressure medium reservoir (28), a throttle (27) and a return pump (35) driven by an electric motor being arranged in series in the delivery direction in the return conduit, and having means for controlling the delivery flow of the return pump, characterised in that the delivery flow of the return pump (35) can be increased if at least one of the following conditions occurs: with increasing pressure in the pressure medium reservoir (28), with the attainment of a predetermined charge in the pressure medium reservoir (28), with increasing volume flow of pressure medium to be returned from the wheel brake (14).

2. Wheel-lock protection appliance according to Claim 1, characterised in that the rotational speed or the delivery volume of the return pump (35) is variable.

3. Wheel-lock protection appliance according to Claim 1, having a pressure medium reservoir (28) in the form of a cylinder (29) with a moving partition (piston 31), characterised in that the delivery flow of the return pump (35) can be controlled as a function of the position of the partition (piston 31).

4. Wheel-lock protection appliance according to Claim 1, having a cylinder (29) with a moving partition (piston 31) as the pressure medium reservoir (28), characterised in that a conduit (34) which bypasses the throttle (27) and has a non-return valve (33) is connected to the cylinder (29), which conduit (34) can be freed by the partition (piston 31) when the cylinder (29) is at least approximately half full.

5. Wheel-lock protection appliance according to Claim 1, having a pressure medium reservoir (28.2) with a moving partition (piston 31.2), characterised in that a shut-off valve (41.2) is provided in a conduit (34.2) bypassing the pressure medium reservoir (28.2) and the throttle (27.2), which shut-off valve (41.2) can be switched into its through-flow position by the partition (piston 31.2) when the pressure medium reservoir (28.2) is at least approximately half full.

6. Wheel-lock protection appliance according to Claim 1, characterised in that a by-pass conduit (51.3) for the throttle (27.3) is provided with a 2/2-way valve (52.3), which valve frees the by-pass conduit at a specified pressure in the pressure medium reservoir (28.3).

7. Wheel-lock protection appliance according to Claim 1, characterised in that the throttle (27.4) is pressure-adjustable as a function of the pressure in the pressure medium reservoir (28.4).

## Revendications

1. Dispositif antiblocage (20) entre le maître-cylindre de frein (11) et au moins un frein de roue (14) d'un véhicule, avec un dispositif à soupape antiblocage (22) dans une conduite de frein (16) partant du maître-cylindre vers les freins de roue, une conduite de refoulement (26) pour évacuer le fluide sous pression des freins de roue vers le maître-cylindre, la conduite de refoulement comportant successivement dans le sens de circulation du fluide, après un accumulateur de fluide sous pression (28) un organe d'étranglement (27) et une pompe de refoulement (35), électrique, et des moyens pour commander le débit de la pompe de refoulement, dispositif caractérisé en ce que le débit de la pompe de refoulement (35) peut être augmenté lorsque se produit au moins l'un des états suivants : avec l'augmentation de la pression dans l'accumulateur de fluide sous pression (28), lorsqu'on atteint un certain degré de remplissage de l'accumulateur de fluide sous pression (28), lorsque le débit du fluide sous pression à refouler des freins de roue (14) augmente.

2. Dispositif antiblocage selon la revendication 1, caractérisé en ce que la vitesse de rotation ou le débit de la pompe de refoulement (35) sont variables.

3. Dispositif antiblocage selon la revendication 1, comportant un accumulateur de fluide sous pression (28) en forme de cylindre (29) avec une cloison mobile (piston 31), caractérisé en ce que le débit de la pompe de refoulement (35) se commande en fonction de la position de la cloison (piston 31).

4. Dispositif antiblocage selon la revendication 1, comprenant un cylindre (29) avec une cloison mobile (piston 31) constituant un accumulateur de fluide sous pression (28), dispositif caractérisé en ce qu'au cylindre (29), est reliée une conduite (34) munie d'un clapet anti-retour (33) contournant l'organe d'étranglement (27), cette conduite étant ouverte par la cloison (piston 31) lorsque le cylindre (29) est au moins rempli sensiblement de moitié.

5. Dispositif antiblocage selon la revendication 1, comportant un accumulateur de fluide sous pression (28.2) ayant une cloison mobile (piston 31.2), caractérisé en ce que, dans une conduite (34.2) contournant l'accumulateur de fluide sous pression (28.2) et l'organe d'étranglement (27.2), il est prévu un clapet d'arrêt (41.2) qui peut être commuté en position passante par la cloison (piston 31.2) lorsque l'accumulateur de fluide sous pression (28.2) est au moins rempli sensiblement de moitié.

6. Dispositif antiblocage selon la revendication 1, caractérisé par une conduite de dérivation (51.3) pour l'organe d'étranglement (27.3) munie d'un distributeur à tiroirs à 2/2 voies (52.3) qui libère la conduite de dérivation lorsqu'il règne une pression prédéterminée dans l'accumulateur de fluide sous pression (28.3).

7. Dispositif antiblocage selon la revendication 1, caractérisé en ce que l'organe d'étranglement (27.4) est réglable en pression en fonction de la pression régnant dans l'accumulateur de fluide sous pression (28.4).
